# EUROPEAN PATENT APPLICATION

(11) **EP 3 459 990 A1**
(43) Date of publication of application: **27.03.2019**
(21) Application number: 18183274.2
(22) Date of filing: 06.02.2009
(51) Int. Cl.: C08J 5/18, C08J 7/04, C09D 129/04, C08K 3/34, C08L 79/02

(54) **OXYGEN BARRIER COATING COMPOSITION**

(30) Priority: 08.02.2008 GB 0802435
(62) Divisional of application: 09709232.4
(71) Applicant: Sun Chemical B.V., 1382 LV Weesp (NL)
(72) Inventor: ILLSLEY, Derek Ronald, Maidstone Kent ME17 4QJ (GB); KHAN, Asad Aslam, Ilford Essex IG1 3LH (GB); STREET, Graham Trevor, Bromley Kent BR2 0QL (GB)
(74) Representative: Nieuwenhuys, William Francis

(57) **Abstract**

Good bond strength and shelf life in a composition for preparing a gas barrier coating comprising an aqueous dispersion of a clay and a polyvinyl alcohol and/or an ethylene vinyl alcohol copolymer are achieved by including in the composition a poly(ethyleneimine).

## Description

The present invention relates to gas barrier coatings, particularly having the ability to block the passage of oxygen, and which may be used to coat and impart gas barrier properties to a variety of materials, notably packaging for foods and pharmaceuticals, where exposure to oxygen needs to be eliminated or restricted.

Synthetic plastics materials have long been used for the packaging of foods and other materials which need protection from handling and from moisture. However, in recent years, it has become appreciated that, in addition, many foods and other sensitive materials benefit from being protected from atmospheric oxygen. A wide variety of multilayer laminate structures has been developed to provide barrier properties and other performance characteristics suited to a pack's purpose. These laminates may be any combination of plastic, metal or cellulosic substrates, and may include one or more coating or adhesive layers. Laminates which include polymeric films having metals or inorganic compounds, such as silicon oxides, deposited thereon have been found to give good general barrier properties and are widely used. However, they may lose their ability to prevent the ingress of oxygen altogether at high temperatures, for example when the packaged material is retorted in order to sterilise and/or cook it. Moreover, the inorganic layer of these types of laminate is rather brittle and may crack or break when the laminate is flexed, resulting in a loss of the gas barrier properties.

More recently, gas barrier coatings comprising dispersed clay, especially nanoparticles, and a hydrophilic polymer, such as polyvinyl alcohol (PVA) or ethylenevinyl alcohol copolymer (EVOH), have been used, as described, for example, in US 6 599 622 or EP 0 590 263. Where these are used as a surface coating, as is described in this prior art, there are no problems. However, we have found that, for many purposes, it is desirable that the coating should have a covering as well as a substrate, and, if the gas barrier coating is to be sandwiched between two films of a laminate in this way, then the bond strength between the films and the coating becomes an issue.

We have surprisingly found that, if a mixture of the clay and the polymer used for the gas barrier coating is prepared and left for a period of time, which can be as low as 24 hours, and if it is then used sandwiched between two or more films forming part of an adhesively formed laminate, the bond strength will have deteriorated alarmingly as compared with the same assembly in which the gas barrier coating mixture has been freshly prepared. There is no obvious explanation for this behaviour and we have no explanation for it, but it is a significant finding with significant commercial consequences.

Coating compositions of this type are commonly prepared by a manufacturer in an appropriate liquid solvent or dispersant and sold as such to the user, who will then coat the appropriate packaging material as required. It is evident that, in the normal course of events, such a pre-prepared coating composition will have been kept for considerably more than 24 hours before it is used. Accordingly, for any applications where any degree of bond strength is important, the resulting coating material will be useless.

Subsequently, as disclosed in UK Patent Application No. 0716580.6, filed 24 August 2007, we found that, in order to maintain adequate bond strength of a composite in which a gas barrier coating is positioned between two flexible plastics films using an adhesive, it is necessary that the clay dispersion and the polymer solution or dispersion should be kept separate until shortly before they are to be applied, and we have described a two pack composition, one pack comprising a solution or dispersion of a PVA and/or EVOH, and the other comprising an aqueous dispersion of a clay.

These coatings, although delivering excellent oxygen barrier, required that the PVA/EVOH solution and the clay dispersion be blended shortly before application in instances where the coated films would subsequently be formed into adhesively formed laminates. The reason for this was that the bond strengths decreased as the blended coating was allowed to stand. This was an important finding in its own right as it demonstrated an innate problem with this type of coating in terms of practical handling. Clearly, for ease of use, a 1-pack formulation would be preferable. Furthermore, the 2-pack compositions did not adhere well to a wide range of substrates, particularly poly(propylene) and poly(ethylene) films. This has necessitated the use of a primer applied to such films prior to coating the 2-pack composition and subsequent lamination.

It is well known that primers can be applied to plastic films prior to depositing an oxygen barrier coating based on PVA/EVOH. Examples of these include US6106950 (H.B. Fuller) and EP 254468 (DuPont), where polyurethane primers are described. The use of PEI (poly(ethyleneimine)) as a primer coating for oxygen barrier coatings has also been described, for example in EP 461772 A3 (Mobil Oil Co.). WO 98/34982 (Mobil Oil) also describes a primer based on PVA and PEI; this provided the required adhesion and a degree of oxygen barrier. However, to achieve high oxygen barrier, coatings based solely on PVA/EVOH are insufficient.

EP 761739 A1 discloses a gas barrier resin composition which is a combination of resin and an aggregated inorganic layer compound which may be a clay mineral. The average particle size of the inorganic layer compound after being aggregated (i.e., after having its size increased) is greater than 1µm or else the gas barrier properties of the composition is unsatisfactory. Aggregation to increase the average particle size up to 5 times can be effected by use of a coagulant which is soluble in a dispersion medium the resin composition may contain and can be a water-soluble high molecular weight substance or an electrolyte. Water soluble polyamides and polysaccharides are preferred but PEI can also be used.

We have now surprisingly found that the incorporation of a poly(ethyleneimine) into the coating composition allows the disadvantages of our two-part coating method to be overcome.

Thus, the present invention consists in a composition for preparing a gas barrier coating, said composition comprising an aqueous dispersion of a clay, a PVA and/or EVOH and a poly(ethyleneimine).

In a further aspect, the invention provides a gas barrier film comprising a flexible polymer film coated with a coating comprising a clay, a PVA and/or EVOH and a poly(ethyleneimine).

In a still further aspect, the present invention provides a gas barrier film comprising: a first flexible polymer film having a gas barrier coating comprising a clay, a PVA and/or EVOH and a poly(ethyleneimine); and a second flexible polymer film adhered to the first flexible polymer film, such that the coating is between the first and the second polymer films.

In yet a further aspect, the present invention consists in a process for preparing a gas barrier film, comprising:
1. coating a first flexible polymer film with an aqueous dispersion of a clay, a PVA and/or EVOH and a poly(ethyleneimine);
2. allowing the coating to dry;
3. applying an adhesive coating to either or both of the coated side of the first film or to a second flexible polymer film; and
4. adhering the first and second films together.

The bond strength between the two films is preferably at least 1.0N/15mm, more preferably at least 1.5N/15mm, after full cure of the adhesive has been achieved.

The time taken for the adhesive to cure fully will vary depending on the nature of the adhesive and will be well known to those skilled in the field. For example, it can take up to 10 days at room temperature with conventional isocyanate-based adhesives, and up to 10 days at 50°C with aliphatic isocyanate 2-pack types.

Where the adhesive is applied to the second film only, steps 1 and 3 may be carried out in any order. Step 2 is, in any event, carried out after Step 1, and Step 4 is carried out after steps 1, 2 and 3.

There is no particular restriction on the nature of the PVA or EVOH used in the present invention, provided that it can form a solution or dispersion in an aqueous medium. Such polymers have a high proportion of free hydroxy groups which can form hydrogen bonds with salt groups in the metal silicate and thus serve as a dispersing agent for the silicate. Examples of such polymers are described in, for example, US 6 599 622 or EP00590263B1, the disclosure of which is incorporated herein by reference.

The clay used is preferably nanoparticulate, that is having an average particle size less than 1 µm, although somewhat larger particles of up to 10µm can also be employed. Also preferably a portion of the clay mineral has been intercalated or exfoliated during the dispersion process. The clay is not an aggregated material, and in fact when intercalated and/or exfoliated, the particle size is reduced relative to that of the neat clay. There is no restriction on the type of clay used in this invention provided that it is sufficiently dispersible in an aqueous medium and that it is capable of being intercalated or exfoliated during dispersion. In an exfoliated form the aspect ratio of the clay (i.e. the ratio between the length and thickness of a single clay 'sheet') will have an impact on the level of oxygen barrier achieved. The greater the aspect ratio, the more the rate of oxygen diffusion through the dry coating and laminate will be reduced. Clay minerals with aspect ratios between 20 and 10,000 are preferably used. Particularly preferred are those minerals having an aspect ratio greater than 100. Examples of suitable clays include kaolinite, montmorillonite, atapulgite, illite, bentonite, halloysite, kaolin, mica, diatomaceous earth and fuller's earth, calcined aluminium silicate, hydrated aluminium silicate, magnesium aluminium silicate, sodium silicate and magnesium silicate. Commercial examples of suitable materials are Cloisite Na+ (available from Southern Clay), Bentone ND (available from Elementis), Of these, the clays are preferred, nanoparticulate clays being most preferred.

The coating composition is applied in the form of a solution or dispersion of the clay, the polymer and the poly(ethyleneimine) in a suitable solvent. The solvent is preferably aqueous, and is more preferably water, optionally containing a small quantity of a miscible co-solvent, such as an alcohol (for example ethanol, n-propanol or isopropanol) or a ketone (such as acetone). Where a co-solvent is present, this can be up to 75% (w/w) of the total composition. However, it is preferred that the content of the co-solvent is less than 50%, more preferably less than 50% of the entire composition. The preferred co-solvent is an alcohol, preferably ethanol or isopropanol.

If desired, in addition to the PVA and/or EVOH, other polymers or resins may be included in the coating composition, provided that these co-resins are themselves compatible in the final composition. Examples of such polymers and resins include solution acrylics, acrylic emulsions, polyesters, alkyds, sulphopolyesters, polyurethanes, vinyl acetate emulsions, poly(vinyl butyral), poly(vinyl pyrrolidone), poly(ethylene imine), polyamides, polysaccharides, proteins, epoxies, etc. It is also possible to include sol-gel precursors in these compositions, e.g. a hydrolysate of tetraethyl orthosilicate.

Also, additives, such as biocides, fungicides, surfactants, wetting aids, and others well known to those versed in the art, may be included, provided that they do not adversely affect the oxygen barrier, adhesion and laminate bond strength properties of the coating, or adversely affect these properties to an unacceptable extent.

The amount of polymer (total of PVA, EVOH and optional polymers and resins) in the coating composition is preferably from 40 to 95% of the total solids comprising polymer and clay, and more preferably from 50 to 90%. In other words, the ratio of clay to polymer is preferably from 1.5:1 to 1:19, more preferably from 1:1 to 1:9. The concentration of clay and polymer in the solution will depend on their solubility/dispersability and the way in which the coating will be applied (gravure, flexo, curtain coating, roll coating, dip coating, spray, etc.), the amount of solvent employed preferably being the minimum needed to achieve sufficient flowability to coat the substrate adequately. In general, the clay will be employed in the form of a 1.0-15% by weight solution/dispersion in water or water+co-solvent (prior to its addition to the PVA/EVOH containing component), and this will dictate the contents of the remaining components.

In accordance with the present invention, the composition includes poly(ethyleneimine). In general, it is preferred that there should be sufficient poly(ethyleneimine) present to ensure that the composition has a printable viscosity, although the viscosity of the composition is also affected by the other components, as is well known in the art. The amount of poly(ethyleneimine) in the composition is not sufficient to cause aggregation of the clay and thereby cause the average particle size to increase. It is preferably from 0.05 to 5.0% (w/w) (of the total coating composition), more preferably from 0.2 to 2.5% and most preferably from 0.25 to 1.0%. We also prefer that the ratio of poly(ethyleneimine) to clay should be in the range from 0.1 to 2.0 (on a weight-for-weight basis), more preferably from 0.2 to 1.5, most preferably from 0.25 to 1.0. Poly(ethyleneimine)s are available commercially from a large number of suppliers, for example, BASF, under the trade names Lupasol WF, Lutensol and Polymin, Epomin (Nippon Shokubai), Dow PEI-18 (Dow Chemical Co.).

The overall solids content of the coating is preferably from 0.5 to 15%; more preferably from 2 to 8% (w/w), which is relatively low, in order to delay or prevent the premature onset of gelation of the coating, which results from the build up of structure held in place by weak electrostatic charges.. The overall solids content of the coating will be determined by the viscosity requirement and also the content of the nanoclay, which can increase viscosity due to the electrostatic interparticle interactions. The coatings may be applied by known methods; for example gravure, flexographic coating, roll coating, dip coating, etc.

The coating composition of the present invention comprising the clay, the polymer, the poly(ethyleneimine) and a solvent or dispersant therefor may be applied to a substrate by any conventional means. The solvent or dispersant may then be removed, e.g. by heating, leaving a film comprising the clay dispersed through the polymer on the substrate. The resulting gas barrier film is then preferably adhered to a further flexible plastics sheet.

The thickness of the coating of the present invention will depend in part on the ability of the clay to form a continuous, coherent coating layer. However, in general, we prefer that the coating should be from 50 nm to 3000 nm thick, more preferably from 200 to 2000 nm thick.

There is no particular restriction on the nature of the flexible substrate, although it is preferably a plastics film, and any material suitable for the intended use may be employed. However, where the matter being packaged with the coating film of the present invention is a foodstuff or pharmaceutical, it will normally be preferred that the plastics film or other substrate should be food grade. Examples of suitable materials include: polyolefins, such as polyethylene or polypropylene; polyesters, such as polyethylene terephthalate, polybutylene terephthalate or polyethylene naphthenate; polyamides, such as nylon-6 or nylon-66; and other polymers, such as polyvinyl chloride, polyimides, acrylic polymers, polystyrenes, celluloses, or polyvinylidene chloride,. It is also possible to use copolymers of any compatible two or more of the monomers used to produce these polymers. Furthermore, compositions of the present invention may be included in adhesively formed laminates comprising paper substrates (such as polyester and polyolefin coated paperboards commonly encountered in food packaging).

The two flexible polymer films may be the same as each other or they may be different from each other.

There is no particular restriction on the nature of the adhesive used, and any adhesive commonly used for the adhesion of two or more plastics films may be employed in the present invention. Examples of suitable adhesives include solvent-based (polyurethane) types such as those from Henkel (Liofol UR3969/UR 6055, Liofol UR3640/UR6800, Liofol UR3894/UR6055), Rohm&Haas (Adcote 811/9L10) and Coim (CA2525/2526), Solvent-free polyurethane adhesives such as Liofol 7780/UR6082, UR7750/UR6071 from Henkel, and Mor-Free ELM-415A/Mor-Free CR140 from Rohm&Haas, can also be used. As well as polyurethane adhesives, epoxy-based types such as Lamal 408-40A/C5083 may be used. Waterborne adhesives, such as Aqualam 300A/300D, an epoxy type from Rohm&Haas may also be used.

The adhesive may be applied directly to one of the films and then adhered to the gas barrier coating on the other film, or it may be applied to the gas barrier coating on one film and then adhered to the other film. In any case, the order of layers will be: a plastics film; the gas barrier coating; an adhesive; and another plastics film. If desired, layers of other materials may be interposed between any two of these layers, or on either side of the 2 flexible plastic substrates having the barrier coating between them.

The invention still further provides a packaged foodstuff, pharmaceutical or other material sensitive to oxygen, wherein the packaging comprises a gas barrier material of the present invention.

The present invention may also be described with reference to the following numbered clauses:
1. A composition for preparing a gas barrier coating, said composition comprising an aqueous dispersion of a clay, polymer which is a polyvinyl alcohol and/or an ethylene vinyl alcohol copolymer, and a poly(ethyleneimine).
2. A composition according to clause 1, in which some or all of the clay has been intercalated or exfoliated during dispersion.
3. A composition according to clause 1 or clause 2, in which the clay has an aspect ratio from 20 to 10,000.
4. A composition according to any one of the preceding clauses, in which the amount of polymer is from 40 to 95% of the total solids comprising polymer and clay.
5. A composition according to any one of the preceding clauses, in which the amount of polymer is from 50 to 90% of the total solids comprising polymer and clay.
6. A composition according to any one of the preceding clauses, in which the amount of poly(ethyleneimine) in the composition is from 0.05 to 5.0% w/w of the total coating composition.
7. A composition according to clause 6, in which the amount of poly(ethyleneimine) in the composition is from 0.2 to 2.5%.
8. A composition according to clause 7, in which the amount of poly(ethyleneimine) in the composition is from 0.25 to 1.0%.
9. A composition according to any one of the preceding clauses, in which the ratio of poly(ethyleneimine) to clay is from 0.1:1 to 2.0:1 on a weight-for-weight basis.
10. A composition according to clause 9, in which the ratio of poly(ethyleneimine) to clay is from 0.2:1 to 1.5:1, preferably from 0.25:1 to 1.0:1.
11. A composition according to any one of the preceding clauses, in which the clay has an average particle size of less than 1 µm.
12. A gas barrier film comprising a flexible polymer film coated with a coating comprising a clay, a polyvinyl alcohol and/or an ethylene vinyl alcohol copolymer and a poly(ethyleneimine).
13. A gas barrier film comprising: a first flexible polymer film having a gas barrier coating comprising a clay, polymer which is a polyvinyl alcohol and/or an ethylene vinyl alcohol copolymer, and a poly(ethyleneimine); and a second flexible polymer film adhered to the first flexible polymer film, such that the gas barrier coating is between the first and the second polymer films.
14. A film according to clause 12 or clause 13, in which some or all of the clay has been intercalated or exfoliated during dispersion.
15. A film according to any one of clauses 12 to 14, in which the clay has an aspect ratio from 20 to 10,000.
16. A film according to any one of clauses 12 to 15, in which the amount of polymer is from 40 to 95% of the total solids comprising polymer and clay.
17. A film according to any one of clauses 12 to 16, in which the amount of polymer is from 50 to 90% of the total solids comprising polymer and clay.
18. A film according to any one of clauses 12 to 17, in which the amount of poly(ethyleneimine) is from 0.05 to 5.0% w/w of the total gas barrier coating.
19. A film according to clause 18, in which the amount of poly(ethyleneimine) in the gas barrier coating is from 0.2 to 2.5%.
20. A film according to clause 19, in which the amount of poly(ethyleneimine) in the gas barrier coating is from 0.25 to 1.0%.
21. A film according to any one of clauses 12 to 20, in which the ratio of poly(ethyleneimine) to clay is from 0.1:1 to 2.0:1 on a weight-for-weight basis.
22. A film according to clause 21, in which the ratio of poly(ethyleneimine) to clay is from 0.2:1 to 1.5:1, preferably from 0.25:1 to 1.0:1.
23. A film according to any one of clauses 12 to 22, in which the thickness of the coating is from 50 nm to 3000 nm.
24. A film according to clause 23, in which the thickness of the coating is from 200 to 2000 nm.
25. A film according to any one of clauses 13 to 24, further comprising an adhesive.
26. A process for preparing a gas barrier film, comprising:
   a. coating a first flexible polymer film with an aqueous dispersion of a clay, polymer which is a polyvinyl alcohol and/or an ethylene vinyl alcohol copolymer, and a poly(ethyleneimine);
   b. allowing the coating to dry;
   c. applying an adhesive coating to either or both of the coated side of the first film or to a second flexible polymer film; and
   d. adhering the first and second films together.
27. A process according to clause 26, in which some or all of the clay has been intercalated or exfoliated during dispersion.
28. A process according to clause 26 or clause 26, in which the clay has an aspect ratio from 20 to 10,000.
29. A process according to any one of clauses 26 to 28, in which the amount of polymer is from 40 to 95% of the total solids comprising polymer and clay.
30. A process according to any one of clauses 26 to 29, in which the amount of polymer is from 50 to 90% of the total solids comprising polymer and clay.
31. A process according to any one of clauses 26 to 30, in which the amount of poly(ethyleneimine) is from 0.05 to 5.0% w/w of the dispersion.
32. A process according to clause 31, in which the amount of poly(ethyleneimine) in the dispersion is from 0.2 to 2.5%.
33. A process according to clause 32, in which the amount of poly(ethyleneimine) in the dispersion is from 0.25 to 1.0%.
34. A process according to any one of clauses 26 to 33, in which the ratio of poly(ethyleneimine) to clay is from 0.1:1 to 2.0:1 on a weight-for-weight basis.
35. A process according to clause 34, in which the ratio of poly(ethyleneimine) to clay is from 0.2:1 to 1.5:1, preferably from 0.25:1 to 1.0:1.
36. A process according to any one of clauses 26 to 35, in which the thickness of the coating is from 50 nm to 3000 nm.
37. A process according to clause 36, in which the thickness of the coating is from 200 to 2000 nm.

The invention is further illustrated by the following non-limiting Examples.

### EXAMPLES

The oxygen transmission rates of the coated samples in the following Examples were determined on a Mocon Oxtran 2/21 gas permeability tester at 23°C and 50% relative humidity. The substrates, which were corona discharge treated prior to application of the coatings, were 25µm OPP (oriented polypropylene - MB400), 12µm PET (polyethylene terephthalate - Mylar 800), 25µm PLA (polylactic acid - Treofan PLA121), 23µm cellulose acetate (Natureflex) and a 20µm starch-based film (MaterBi.), The coatings were applied with a No.2 K-bar and were dried in a warm flow of air (laboratory prints were dried with a hair dryer).

The coatings were prepared by blending an 8% aqueous solution of PVA (a 80/20 blend of Exceval AQ-4104 and Mowiol 3-96) containing 10% (w/w) of isopropanol, a 3% aqueous dispersion of montmorillonite clay (Cloisite Na) which contained 30% (w/w) of isopropanol, and a 10% solution of PEI [poly(ethyleneimine) - Lupasol WF] in IPA (isopropanol), according to Table 1. As well as the compositional data, Table 1 also records the viscosities of these coatings. A Zahn-2 flow cup was used for these measurements and the viscosity is noted as the time required for the coating to flow out of the cup. For a gravure applied coating, a viscosity of 18-23seconds is normal.

Adhesion was assessed by the well known tape test; whereby adhesive tape is applied to the coated surface and removed rapidly. The quality of adhesion is determined by the amount of coating remaining, 100% being full adhesion and 0% no adhesion. The adhesion results, as well as the oxygen transmission rates on various substrates are provided in Table 2.

Laminates were prepared by applying an adhesive over the top of the dried coating and then laminating this to a further plastic film. The adhesive used in these experiments was Morchem 614A/614C, a 2-pack polyurethane type, made according to the manufacturer's instructions. The laminates were allowed to cure fully before the laminate bond strengths were determined. The bond strengths are reported as the force required to separate the webs (in N/15mm). Where the bonds were sufficiently strong to cause film tear the results were then reported as FT (Film Tear) with the maximum bond strength recorded before rupture. Table 3 reports the laminate structures and the bond strengths. It should be noted that any suitable laminating adhesive could be used, including biodegradable types derived from sustainable sources such as those supplied by Sustainable Adhesive Products company.

**Table 1: Description of Examples and Coating Viscosities**

| **Example** | **IPA (g)** | **Deionised Water (g)** | **PVA Solution (g)** | **Clay Dispersion (g)** | **PEI Solution (g)** | **Viscosity (s)** |
|---|---|---|---|---|---|---|
| Comparative Example 1 | 3.0 | 14.5 | 20.7 | - | 1.85 | 18 |
| Comparative Example 2 | 3.0 | 14.5 | 20.7 | - | 2.7 | 18 |
| Comparative Example 3 | 2.0 | 6.75 | 15.0 | 15.0 | - | 21 |
| Example 1 | 2.0 | 6.75 | 15.0 | 15.0 | 0.75 | >60 (unprintable) |
| Example 2 | 2.0 | 6.75 | 15.0 | 15.0 | 1.0 | >60 (unprintable) |
| Example 3 | 2.0 | 6.75 | 15.0 | 15.0 | 1.25 | 28 |
| Example 4 | 2.0 | 6.75 | 15.0 | 15.0 | 1.60 | 23 |
| Example 5 | 2.0 | 6.75 | 15.0 | 15.0 | 1.90 | 20 |
| Example 6 | 2.0 | 6.75 | 15.0 | 15.0 | 2.3 | 19 |
| Example 7 | 2.0 | 6.75 | 15.0 | 15.0 | 2.7 | 19 |
| Example 8 | 2.0 | 6.75 | 15.0 | 15.0 | 3.8 | 19 |
| Example 9 | 2.0 | 11 | 15.0 | 8.0g Microlite 963 | 3.0 | 19 |

| | | | | | | |
|---|---|---|---|---|---|---|
| Note: Microlite 963 is an aqueous dispersion of vermiculite, supplied by W.R.Grace | | | | | | |

**Table 2: Adhesion and Oxygen Transmission Rates**

| **Example** | **Film** | **Adhesion (%)** | **Oxygen Transmission Rate (cm³/m²/day)** |
|---|---|---|---|
| Comparative Example 1 | cdt MB400 (OPP) | 100 | 8.28 |
| Comparative Example 2 | cdt MB400 (OPP) | 100 | 61.8 |
| Comparative Example 3 | cdt MB400 (OPP) | 0 | 1.45 |
| Example 3 | cdt MB400 (OPP) | 100 | 1.93 |
| Example 4 | cdt MB400 (OPP) | 100 | 3.63 |
| Example 5 | cdt MB400 (OPP) | 100 | 1.17 |
| Example 5 | cdt Mylar 800 | 100 | 0.33 |
| Example 5 | cdt PLA | 100 | 0.19 |
| Example 5 | cdt Natureflex | 100 | 0.45 |
| Example 5 | cdt Materbi | 100 | 4.61 |
| Example 6 | cdt MB400 (OPP) | 100 | 0.81 |
| Example 7 | cdt MB400 (OPP) | 100 | 1.64 |
| Example 8 | cdt MB400 (OPP) | 100 | 6.00 |
| Example 9 | cdt MB400 (OPP) | 100 | 0.14 |
| No Coating | cdt MB400 (OPP) | - | >1000 |
| No Coating | cdt Mylar 800 | - | 100-110 |
| No Coating | cdt PLA | - | 500-550 |
| No Coating | cdt Natureflex | - | 12.54 |
| No Coating | cdt Materbi | - | >1000 |

**Table 3: Laminate Structures and Bond Strengths**

| **Base Film** | **Coating** | **Laminating Film** | **Bond Strength (N/15mm)** |
|---|---|---|---|
| cdt MB400 (OPP) | Comparative Example 1 | 20µm cast poly(propylene); 'CPP' | FT; M=2.9 |
| cdt MB400 (OPP) | Comparative Example 3 | CPP | <0.2 |
| cdt MB400 (OPP) | Example 3 | CPP | 1.7 |
| cdt MB400 (OPP) | Example 4 | CPP | 2.8 |
| cdt MB400 (OPP) | Example 5 | CPP | FT; M=3.7 |
| cdt MB400 (OPP) | Example 6 | CPP | FT; M=3.3 |
| cdt MB400 (OPP) | Example 7 | CPP | FT; M=3.8 |
| cdt MB400 (OPP) | Example 8 | CPP | FT; M=3.4 |
| cdt MB400 (OPP) | Example 9 | CPP | 1.1 |
| cdt MB400 (OPP) | Examples 9+5 | CPP | 1.2 |
| cdt Mylar 800 | Example 7 | 20µm PE | FT; M=3.4 |
| cdt Natureflex | Example 7 | PE | 2.8 |
| cdt Materbi | Example 7 | Natureflex | 1.3 |

| | | | |
|---|---|---|---|
| Note: Where the bond strength was sufficient to cause film tear of the film this is recorded as 'FT' along with the maximum bond strength prior to film tear. | | | |

### EXAMPLE 10

A coating prepared according to Example 3 was allowed to stand for 2 months before being applied to a primed OPP film (the primer being based on a solution of PVA and PEI), before being laminated to the CPP film. An oxygen transmission rate of 0.34 was recorded for this laminate and the MB400 tore during the bond strength test.

### COMPARATIVE EXAMPLE 4

The coating described in Comparative Example 3 was applied to the primed MB400 film as described in example 10, and then laminated. With no ageing of the coating the MB400 web tore during the bond strength test. However, after allowing the coating to stand for 1 week the resulting bond strength of the laminate had fallen to 0.5N/15mm.

## Claims

1. A composition for preparing a gas barrier coating, said composition comprising an aqueous dispersion of a clay, polymer which is a polyvinyl alcohol and/or an ethylene vinyl alcohol copolymer, and a poly(ethyleneimine).

2. A composition according to Claim 1, in which some or all of the clay has been intercalated or exfoliated during dispersion.

3. A composition according to Claim 1 or Claim 2, in which the clay has an aspect ratio from 20 to 10,000.

4. A composition according to any one of the preceding Claims, in which the amount of polymer is from 40 to 95% of the total solids comprising polymer and clay, preferably from 50 to 90% of the total solids comprising polymer and clay.

5. A composition according to any one of the preceding Claims, in which the amount of poly(ethyleneimine) in the composition is from 0.05 to 5.0% w/w of the total coating composition, preferably from 0.2 to 2.5%, preferably from 0.25 to 1.0%.

6. A composition according to any one of the preceding Claims, in which the ratio of poly(ethyleneimine) to clay is from 0.1:1 to 2.0:1 on a weight-for-weight basis, preferably from 0.2:1 to 1.5:1, preferably from 0.25:1 to 1.0:1.

7. A composition according to any one of the preceding Claims, in which the clay has an average particle size of less than 1 µm.

8. A gas barrier film comprising a first flexible polymer film coated with a gas barrier coating comprising a clay, a polyvinyl alcohol and/or an ethylene vinyl alcohol copolymer and a poly(ethyleneimine).

9. A gas barrier film according to Claim 8, further comprising: a second flexible polymer film adhered to the first flexible polymer film, such that the gas barrier coating is between the first and the second polymer films.

10. A film according to Claim 8 or Claim 9, in which the gas barrier coating has been prepared from a composition as defined in any of Claims 2-6.

11. A film according to any one of Claims 8 to 10, in which the thickness of the coating is from 50 nm to 3000 nm, preferably from 200 to 2000 nm.

12. A film according to any one of Claims 9 to 11, further comprising an adhesive.

13. A process for preparing a gas barrier film, comprising:
a. providing a first flexible polymer film coated with a composition according to any of Claims 1-6;
b. applying an adhesive coating to either or both of the coated side of the first film or to a second flexible polymer film; and
c. adhering the first and second films together.

14. A process according to Claim 13, wherein step a. comprises coating a first flexible polymer film with a composition according to any of Claims 1-6 and allowing the coating to dry.

15. A process according to Claim 13 or 14, in which the thickness of the coating is from 50 nm to 3000 nm, preferably from 200 to 2000 nm.
